# EUROPEAN PATENT SPECIFICATION

(11) **EP 3 967 593 B1**
(45) Date of publication and mention of the grant of the patent: **19.02.2025**
(21) Application number: 21189620.4
(22) Date of filing: 04.08.2021
(51) Int. Cl.: B63H 20/24, F01N 13/00

(54) **OUTBOARD MOTOR**
AUSSENBORDMOTOR
MOTEUR HORS-BORD

(30) Priority: 11.09.2020 JP 2020153168
(43) Date of publication of application: 16.03.2022
(73) Proprietor: Yamaha Hatsudoki Kabushiki Kaisha, Iwata-shi, Shizuoka 438-8501 (JP)
(72) Inventor: Okamoto, Shuhei, Iwata-shi, 438-8501 (JP); Sugita, Naoki, Iwata-shi, 438-8501 (JP)
(74) Representative: Grünecker Patent- und Rechtsanwälte PartG mbB

(56) References cited:
- EP-A2- 1 852 589
- US-A1- 2004 226 533
- US-A1- 2010 056 002
- US-B1- 9 376 194

## Description

The present invention relates to an outboard motor.

The prior art document US 9 376 194 B1 or the prior art document US 2004/226533 A1 discloses an outboard motor with an engine, a drive shaft extending in a first direction from the engine, a propeller shaft extending in a direction intersecting with the drive shaft, a housing configured to accommodate the engine, the drive shaft, and the propeller shaft and includes at least one discharge portion. The discharge portion discharging exhaust gas. A discharge passage is configured to guide the exhaust gas from the engine to the discharge portion inside the housing. A non-metal cover member is detachably attached to the housing so as to cover the discharge portion and includes an exhaust hollow. Prior art document US 2010/0056002 A1 discloses an outboard motor that includes an engine support member, an engine, an upper casing, a lower casing, a propeller, and an engine cover. On the engine support member, the engine is mounted. The engine cover covers the engine. A crankshaft of the engine is arranged so as to penetrate through the engine in the up-down direction. A drive shaft extends along the up-down direction from the lower end of the engine. The lower end of the drive shaft is coupled to a propeller shaft via a forward-reverse switching mechanism. The propeller rotates integrally with the propeller shaft. Portions in which an exhaust pipe and a pilot water pipe of the engine are exposed of the rear surface of the engine cover are exposed to exhaust gas exhausted from the exhaust pipe and stained with, for example, carbon. In addition, the exposed portions are stained with seawater flowing out from the pilot water pipe and whitened by salt. The exhaust pipe and the pilot water pipe are provided close to each other, such that the area to be stained on the engine cover is small. Moreover, as a prior art, an outboard motor, which includes a discharge passage for guiding exhaust gas and cooling water from an engine, is disclosed (see JP 2015-145137 A). In this type of outboard motor, generally, an exhaust hollow for discharging the above exhaust gas from the discharge passage to the outside is provided directly on a housing. For example, the exhaust hollow is a hole which penetrates the housing from the inside of the housing to the outside of the housing.

In the conventional outboard motor, the hole penetrating the housing is used as the exhaust hollow for discharging the exhaust gas which is discharged from the engine. In this case, fuel, which is contained in the exhaust gas discharged from the exhaust hollow, may adhere to an outer surface around the exhaust hollow of the housing and discolor the outer surface of the housing. In particular, if the housing is made of metal and the exhaust gas includes nitrogen oxide, the nitrogen oxide may oxidize the outer surface around the exhaust hollow of the housing and discolor the outer surface of the housing.

An object of the present invention is to provide an outboard motor which is capable of suppressing discoloration around an exhaust hollow. According to the present invention said object is solved by an outboard motor having the features of independent claim 1. Preferred embodiments are laid down in the dependent claims.

The outboard motor according to one aspect includes an engine, a drive shaft, a propeller shaft, a housing, a discharge passage, and a pair of non-metal cover members. The drive shaft extends in a first direction from the engine. The propeller shaft extends in a direction intersecting with the drive shaft. The housing is configured to accommodate the engine, the drive shaft, and the propeller shaft. The housing includes at least a pair of discharge portions. The discharge portions discharges exhaust gas and cooling water of the engine. The discharge passage is configured to guide the exhaust gas and the cooling water from the engine to the discharge portions inside the housing. At least a pair of non-metal cover members is detachably attached to the housing so as to cover the discharge portion. The non-metal cover members include at least one exhaust hollow.

### Advantageous Effects of Invention

In the present invention, an outboard motor is capable of suppressing discoloration around an exhaust hollow.

### BRIEF DESCRIPTION OF THE DRAWINGS

FIG. 1 is a top view of a watercraft according to an embodiment.
FIG. 2 is a side view of an outboard motor.
FIG. 3A. is a side view in which the outboard motor is partially enlarged.
FIG. 3B. is a side view in which a cover arrangement portion of the outboard motor is partially enlarged.
FIG. 4 is a side view of the outboard motor for explaining a discharge passage.
FIG. 5 is cross-sectional view of a vicinity of a cavitation plate of the outboard motor.
FIG. 6A. is a top view of a left cover member.
FIG. 6B. is a bottom view of the left cover member
FIG. 6C. is a side view of the left cover member (an exhaust hollow is not shown).
FIG. 7A. is a top view of a right cover member.
FIG. 7B. is a bottom view of the right cover member.
FIG. 7C. is a side view of the right cover member (an exhaust hollow is not shown).
FIG. 8 is cross-sectional view of a vicinity of the cavitation plate of the outboard motor according to a variation (A1).
FIG. 9 is a top view of the cover member of the outboard motor according to a variation (A2).

### DETAILED DESCRIPTION OF THE PREFERRED EMBODIMENTS

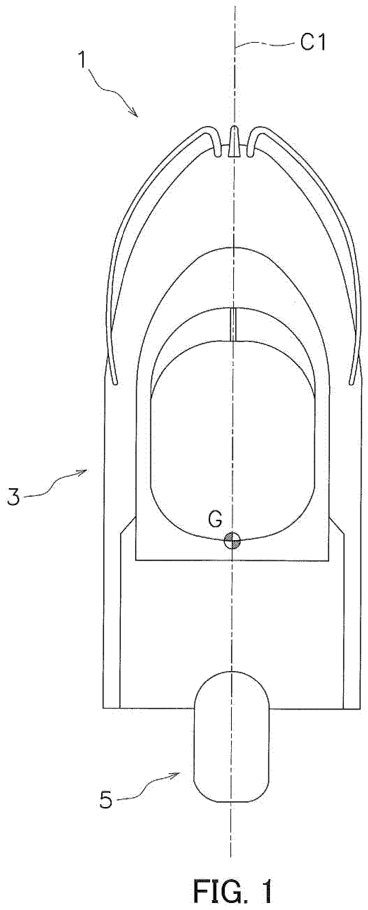

The following embodiments will be described with reference to the drawings. As shown in FIG. 1, the watercraft 1 includes a hull 3 and an outboard motor 5. In this embodiment, an example, in which the number of the outboard motor 5 is one, is described. The number of the outboard motor 5 may be plural.

In the following description, direction of each of front, rear, left, right, up, and down means direction of each of front, rear, left, right, up, and down of the hull 3. For example, as shown in FIG. 1, the center line C1 extending in a front-rear direction of the hull 3 passes through a center of gravity G of the hull 3.

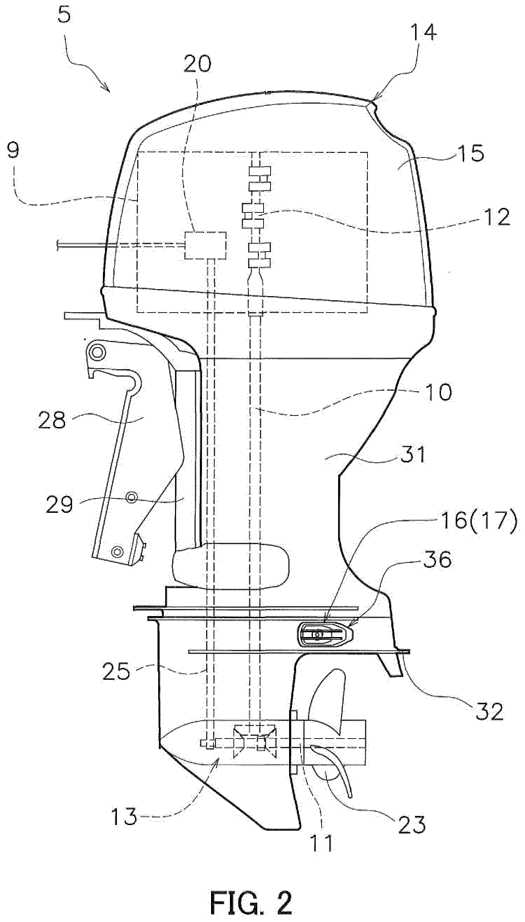

The front-back direction is a direction along the center line C1. The front is an upward direction toward an upper side along the center line C1 of FIG. 1. The rear is a downward direction along the center line C1 of FIG. 1. In this embodiment, the front-rear direction of the outboard motor 5 is defined by an attitude of the hull 3 (an attitude of FIG. 1) when the outboard motor 5 moves the hull 3 in the front-rear direction. The left-right direction of FIG. 2 corresponds to the front-rear direction of the outboard motor 5.

The left-right direction (a width direction) is a direction perpendicular to the center line C1 in FIG. A left side is a direction perpendicular to the center line C1 of FIG. 1 and the direction toward a left side. A right side is a direction perpendicular to the center line C1 of FIG. 1 and the direction toward the right side. A vertical direction is a direction perpendicular to the front-back direction and the left-right direction.

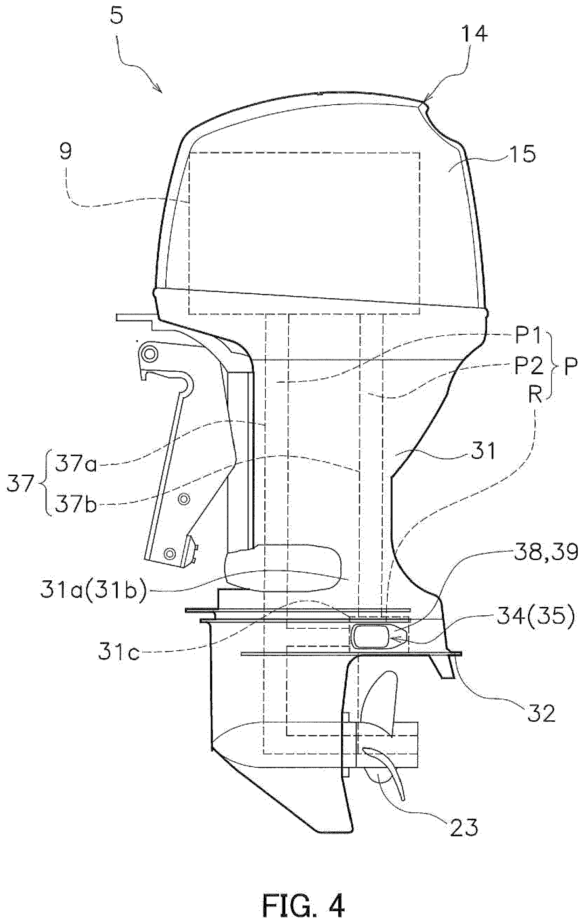

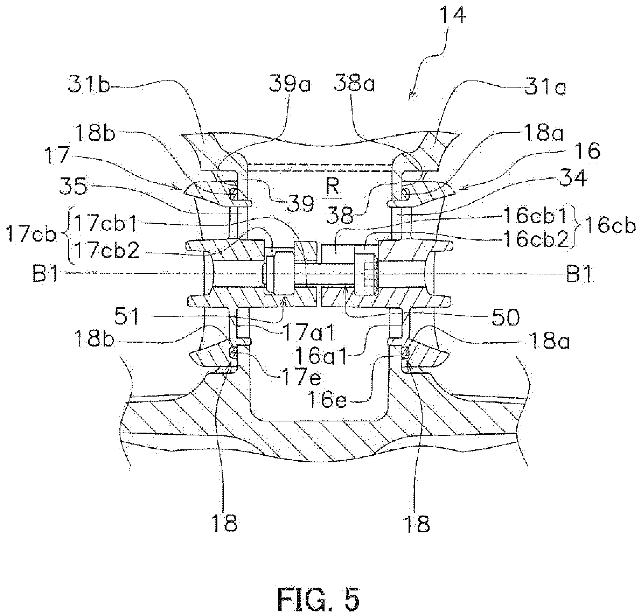

As shown in FIG. 2, the outboard motor 5 generates a propulsive force for propelling the hull 3. The outboard motor 5 is attached to a stern of the hull 3. The outboard motor 5 includes an engine 9, a drive shaft 10, a propeller shaft 11, a housing 14, a discharge passage P (see FIG. 4), and a pair of cover members 16, 17. The outboard motor 5 further includes a seal member 18 (see FIG. 5). The outboard motor 5 further includes a shift mechanism 13 and a bracket 28.

The pair of cover members 16, 17 are provided on both side surfaces of the housing 14 respectively. FIG. 2 shows the cover member 16 which is disposed on a side surface of the housing 14. The cover member 17 is disposed on the opposite side of the cover member 16. A reference numeral of the cover member 17 are shown in parentheses in FIG.2. In the following, when the reference numeral of one member of a pair of members is shown, the reference numeral of the other member of the pair of members is shown in the parentheses.

The engine 9 is a power source that produces the propulsive force of the hull 3. The engine 9 is disposed in the engine cover 15. The engine 9 includes a crankshaft 12. The crankshaft 12 extends in the vertical direction.

The engine 9 is connected to the drive shaft 10. The drive shaft 10 extends in the vertical direction. For example, the drive shaft 10 extends downward (an example of "in a first direction") from the engine 9. The propeller shaft 11 extends in a direction intersecting the drive shaft 10. In this embodiment, the propeller shaft 11 extends in the front-rear direction. The propeller shaft 11 is connected to the drive shaft 10 via the shift mechanism 13. A propeller 23 is connected to the propeller shaft 11.

The shift mechanism 13 is driven by a shift actuator 20 via the shift member 25. The shift mechanism 13 switches a rotation direction of the power which is transmitted from the drive shaft 10 to the propeller shaft 11. Thereby, the rotation direction of the propeller 23 is switched to a forward direction in which the hull 3 moves forward or a reverse direction in which the hull 3 moves backward.

The bracket 28 is used for attaching the outboard motor 5 to the hull 3. The outboard motor 5 is detachably fixed to the stern of the watercraft 1 via the bracket 28. The bracket 28 includes a steering shaft 29. The outboard motor 5 is rotatably supported by the bracket 28 about the steering shaft 29.

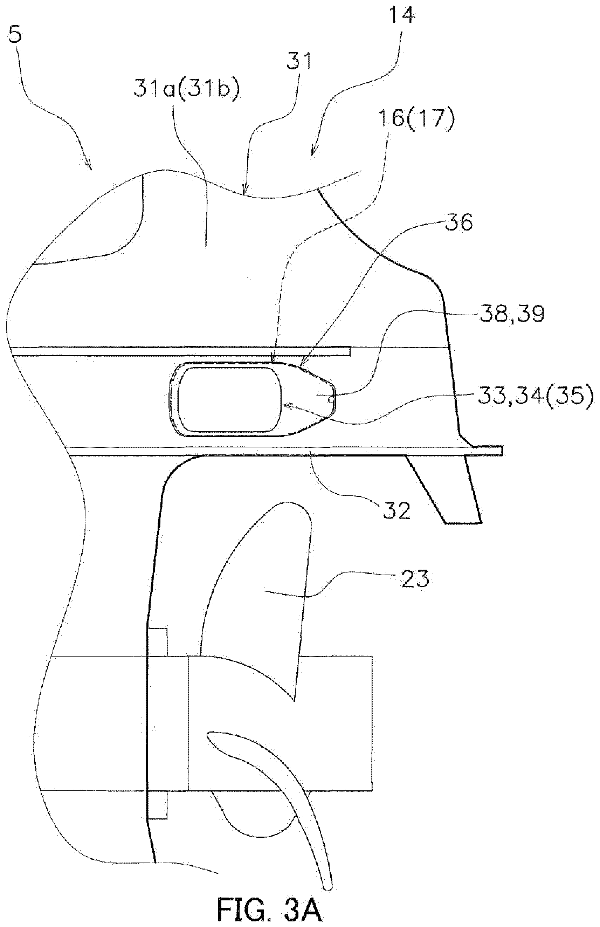

As shown in FIG. 2, the housing 14 accommodates the engine 9, the drive shaft 10, and the propeller shaft 11. Specifically, the housing 14 houses the engine 9, the drive shaft 10, the propeller shaft 11, and the shift mechanism 13. The housing 14 includes a discharge portion 33 (see FIG. 3A) which discharges an exhaust gas of the engine 9 and a cooling water of the engine 9. Specifically, the housing 14 includes the engine cover 15, a housing body 31, the discharge portion 33 (see FIG. 3A), and a cover arrangement portion 36 (see FIG. 3A).

The engine cover 15 covers the engine 9. The engine 9 is disposed inside the engine cover 15. The engine cover 15 is a metal member. The engine cover 15 may be a resin member.

The housing body 31 is disposed below the engine cover 15. The drive shaft 10, the propeller shaft 11, and the shift mechanism 13 are disposed inside the housing body 31. The housing body 31 is a metal member. The housing body 31 may be a resin member.

A cavitation plate 32 is provided on the housing body 31. For example, the cavitation plate 32 is provided on the housing body 31 above the propeller 23. Specifically, the cavitation plate 32 is provided on the housing body 31 in the vertical direction between the propeller 23 and the engine 9.

As shown in FIG. 4, the housing body 31 includes a wall portion 37 which is used for forming the discharge passage P. For example, the wall portion 37 of the passage is integrally formed on the inner surface of the housing body 31. The housing body 31 further includes both side portions 31a, 31b which form a discharge chamber R (see FIG. 4) described later.

As shown in FIG. 3A, the discharge portion 33 includes a pair of discharge portions 34, 35. The pair of discharge portions 34, 35 discharge the exhaust gas and the cooling water discharged from the engine 9. The pair of discharge portions 34, 35 are provided in the housing 14. For example, the pair of discharge portions 34, 35 are provided in the housing body 31 between the engine 9 and the cavitation plate 32.

The pair of discharge portions 34, 35 are respectively provided on the both side portions 31a, 31b of the housing body 31. For example, the pair of discharge portions 34, 35 are respectively provided on the both side portions 31a, 31b of the housing body 31 so as to face each other in the width direction (left-right direction).

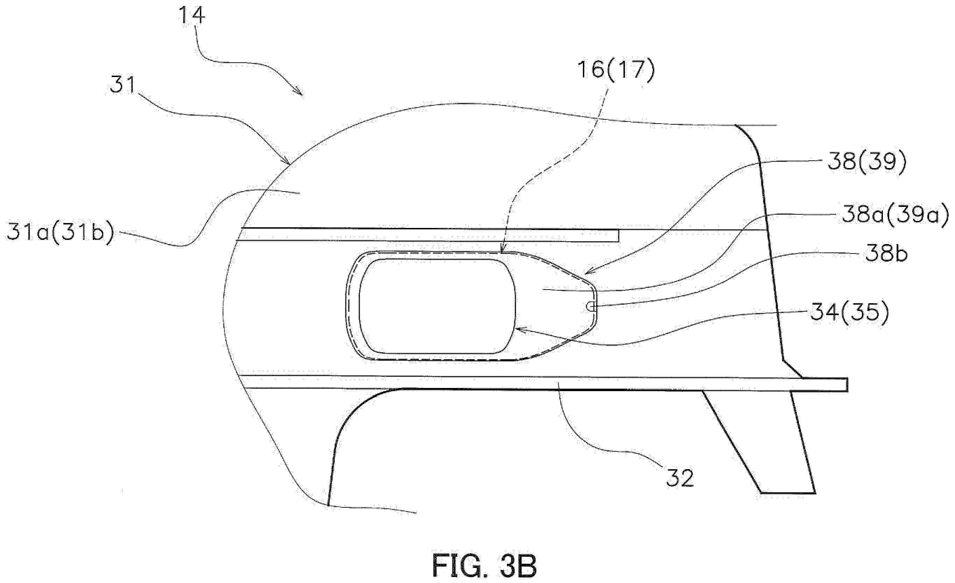

As shown in FIG. 3B, each of the pair of discharge portions 34, 35 is a hollow portion. For example, each of the pair of discharge portions 34, 35 is a rectangular hollow portion. Each of the pair of discharge portions 34, 35 penetrates the housing body 31 from an inside of the housing body 31 toward an outside of the housing body 31. For example, each of the pair of discharge portions 34, 35 penetrates each of the side portions 31a, 31b which forms the discharge chamber R (see FIG. 4).

As shown in FIG. 3A, the cover arrangement portion 36 includes a pair of cover arrangement portions 38, 39. The pair of cover members 16, 17 are respectively disposed on the pair of cover arrangement portions 38, 39. The pair of cover arrangement portions 38, 39 are provided on the housing body 31.

Each of the pair of cover arrangement portions 38, 39 is formed in a concave shape. The pair of discharge portions 34, 35 are respectively provided on the pair of cover arrangement portions 38, 39. For example, as shown in FIG. 3B, the pair of discharge portions 34, 35 are respectively provided on bottom portions 38a, 39a of the pair of cover arrangement portions 38, 39.

A positioning recess 38b (an example of a second recess portion) is provided on one of the pair of cover arrangement portions 38, 39. In this embodiment, an example in which the positioning recess 38b is provided on the bottom portion 38a of the cover arrangement portion 38 is described. A second positioning protruded portion 16h (described later) of the cover member 16 is disposed in the positioning recess 38b.

As shown in FIG. 4, the discharge passage P guides the exhaust gas and the cooling water from the engine 9 toward the pair of discharge portions 34, 35 in the housing 14. The discharge passage P is formed by the housing 14. For example, the discharge passage P is formed by the wall portion 37 of the passage.

The discharge passage P includes the discharge chamber R, an exhaust passage P1 (an example of a first passage), and a cooling water passage P2 (an example of a second passage).

The discharge chamber R guides the exhaust gas and the cooling water toward the pair of discharge portions 34, 35. The discharge chamber R is a space which is provided in the housing body 31 to discharge the exhaust gas and the cooling water from the pair of discharge portions 34, 35. Specifically, the discharge chamber R is a space which is provided in the housing body 31 to discharge the exhaust gas and cooling water from the discharge portions 34, 35 and exhaust hollows 16b, 17b (described later) of the cover members 16, 17.

The discharge chamber R is provided inside the housing body 31 between the engine 9 and the cavitation plate 32. The discharge chamber R is formed by the housing body 31. For example, the discharge chamber R is formed by the both side portions 31a, 31b of the housing body 31 and wall portions 31c of the discharge chamber R.

The wall portions 31c of the discharge chamber R are provided on the inner surfaces of the both side portions 31a, 31b. The both side portions 31a, 31b of the housing body 31 include side walls of the discharge chamber R. The wall portions 31c of the discharge chamber R include a front wall of the discharge chamber R, an upper wall of the discharge chamber R, a lower wall of the discharge chamber R, and a rear wall of the discharge chamber R.

The exhaust passage P1 guides the exhaust gas, which is discharged from the engine 9, from the engine 9 toward the discharge chamber R. The exhaust passage P1 is connected to the discharge chamber R. For example, the exhaust passage P1 is formed by wall portions 37a for the exhaust gas which are provided on the inner surface of the housing 14 (the housing body 31). The exhaust passage P1 extends downward from the engine 9 and is connected to the discharge chamber R. The exhaust gas is discharged from the discharge chamber R to the outside of the housing 14 (the housing body 31) through the discharge portions 34, 35 and the exhaust hollow 16b, 17b of the cover members 16, 17.

Further, the exhaust passage P1 guides the exhaust gas to the rear portion of the propeller 23. The exhaust passage P1 is connected to a space which is formed in a supporting portion of the housing 14 (housing body 31) which supports the propeller 23.

The cooling water passage P2 guides the cooling water, which is used for cooling the engine 9, from the engine 9 toward the discharge chamber R. The cooling water passage P2 is connected to the discharge chamber R. For example, the cooling water passage P2 is formed by wall portions 37b for the cooling water which are provided on the inner surface of the housing 14 (the housing body 31). The cooling water passage P2 extends downward from the engine 9 and is connected to the discharge chamber R. The cooling water is discharged from the discharge chamber R to the outside of the housing 14 (the housing body 31) through the discharge portions 34, 35 and the exhaust hollow 16b, 17b of the cover members 16, 17.

As shown in FIG. 5, the seal member 18 includes a plurality of seal members 18a, 18b, for example, two seal members 18a, 18b. The seal members 18a, 18b are respectively disposed between the housing 14 and the cover members 16, 17. For example, the seal members 18a, 18b are respectively disposed between the cover arrangement portions 38, 39 and the cover members 16, 17.

Specifically, as shown in FIGS. 5, 6C, and 7C, the seal members 18a, 18b are respectively disposed between the bottom portions 38a, 39a of the cover arrangement portions 38, 39 and facing surfaces 16a1, 17a1 of the cover members 16, 17. More specifically, the seal members 18a, 18b are respectively disposed between the bottom portions 38a, 39a of the cover arrangement portions 38, 39 and seal grooves 16e, 17e of the cover members 16, 17.

The seal members 18a, 18b respectively abut on the cover members 16, 17 and the cover arrangement portions 38, 39. Specifically, the seal members 18a, 18b are respectively disposed in the seal grooves 16e, 17e of the cover members 16, 17. In this state, when the cover members 16, 17 are disposed on the cover arrangement portions 38, 39 of the housing body 31, the seal members 18a, 18b respectively abut on the bottom portions 38a, 39a of the cover arrangement portions 38, 39. The seal members 18a, 18b are preferably resin members such as resin O-rings.

Each of the pair of cover members 16, 17 is a non-metal member. For example, each of the pair of cover members 16, 17 is a resin member. As shown in FIG. 3B, the pair of cover members 16, 17 respectively covers the pair of discharge portions 34, 35. The pair of cover members 16, 17 are detachably attached to the housing 14.

Specifically, the pair of cover members 16, 17 are respectively disposed on the pair of cover arrangement portions 38, 39. As shown in FIG. 5, the pair of cover members 16, 17 are connected to each other by a bolt 50 and a nut 51 (an example of a connecting member).

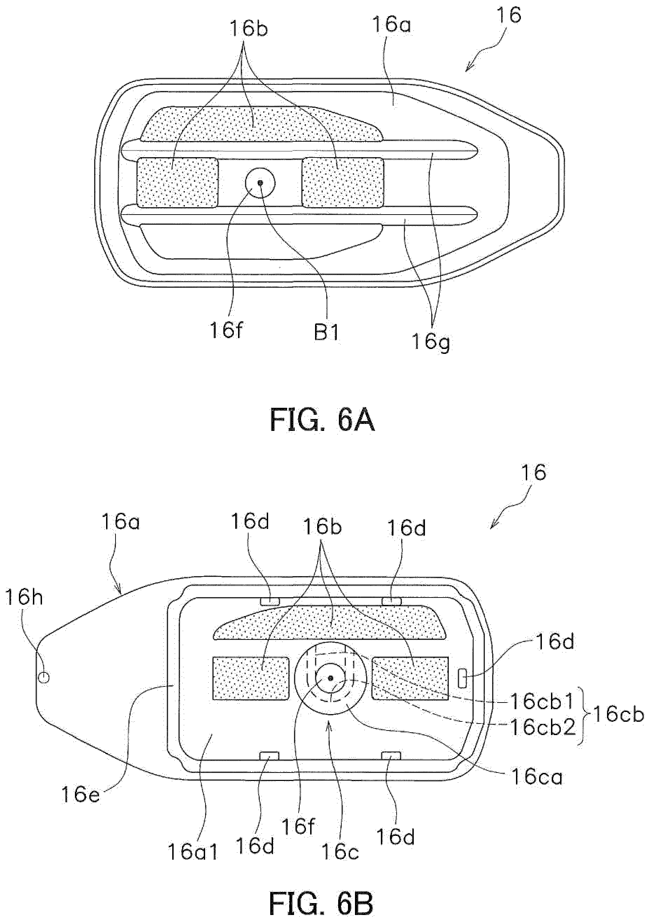

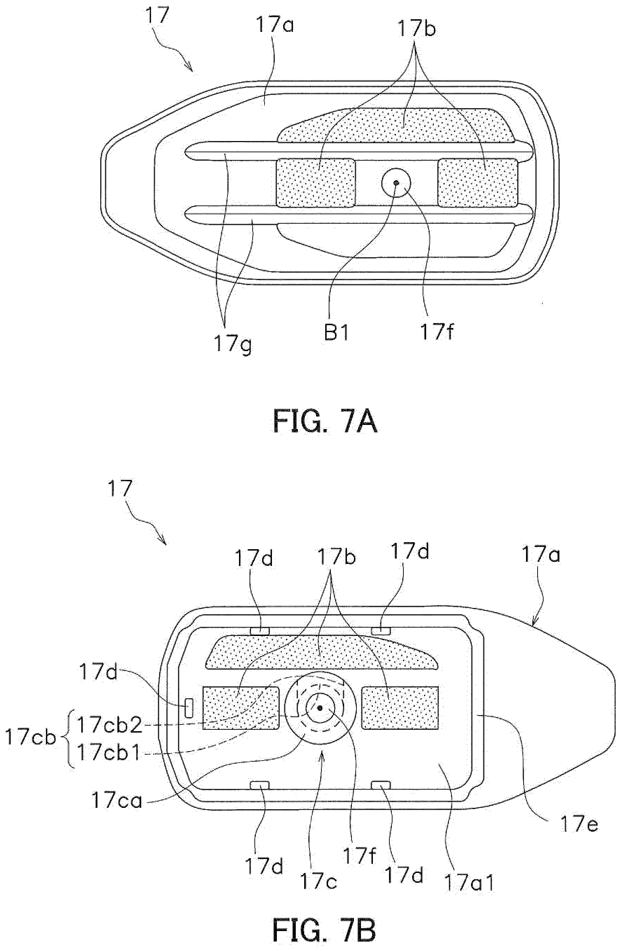

For example, as shown in FIGS. 6A, 6B, 7A, and 7B, the cover members 16, 17 include cover bodies 16a, 17a and at least one exhaust hollow 16b, 17b. The cover members 16, 17 further include boss portions 16c, 17c, at least one first positioning protruded portion 16d, 17d (an example of a first protruded portion), and the seal grooves 16e, 17e (an example of a first recess portion). The cover members 16, 17 further include holes 16f, 17f for tools.

The cover bodies 16a, 17a are respectively disposed on the cover arrangement portions 38, 39 (see FIG. 5). As shown in FIGS. 6B and 7B, the cover bodies 16a, 17a respectively include the facing surfaces 16a1, 17a1 which faces the bottom portions 38a, 39a (see FIG. 5) of the cover arrangement portions 38, 39.

As shown in FIGS. 6A and 7A, rib portions 16g, 17g are respectively provided on the cover bodies 16a, 17a. For example, the pair of rib portions 16g, 17g are disposed so as to face each other and are integrally formed with the cover bodies 16a, 17a. Thereby, the rigidity of the cover bodies 16a, 17a can be improved.

As shown in FIGS. 6A, 6B, 7A, and 7B, at least one exhaust hollow 16b, 17b is provided on the cover bodies 16a, 17a. In this embodiment, an example in which at least one exhaust hollow 16b, 17b is a plurality of exhaust hollow, for example, three exhaust hollow is described. In FIGS. 6A, 6B, 7A, and 7B, the exhaust hollow 16b, 17b are indicated by hatching.

For example, the two exhaust hollow 16b, 17b are provided on the cover bodies 16a, 17a between the pair of rib portions 16g, 17g. The exhaust hollow 16b, 17b are provided on the cover bodies 16a, 17a on an outside of the rib portions 16g, 17g. In this embodiment, the exhaust hollow 16b, 17b are provided on the cover bodies 16a, 17a above the rib portions 16g, 17g.

The boss portions 16c, 17c shown in FIGS. 6B and 7B are inserted into the pair of discharge portions 34, 35 (see FIG. 3B) of the housing 14. The bolt 50 or the nut 51 are disposed on the boss portions 16c, 17c. For example, the boss portions 16c, 17c include boss bodies 16ca, 17ca and slit portions 16cb, 17cb. The boss bodies 16ca, 17ca project respectively from the cover bodies 16a, 17a. The boss bodies 16ca, 17ca are formed in a columnar shape.

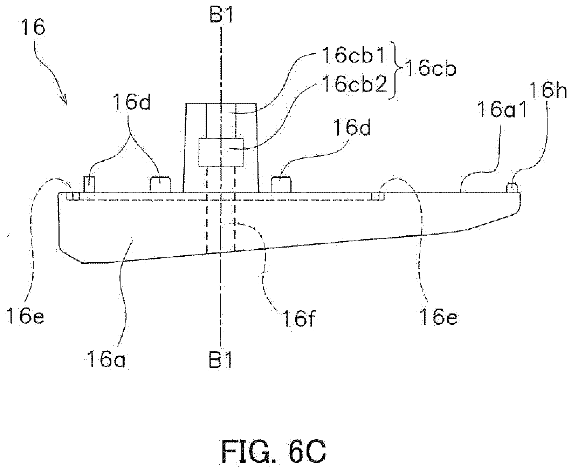

The Bolt 50 and/or the nut 51 (see FIG. 5) are disposed in the slit portions 16cb, 17cb. As shown in FIGS. 6B and 6C, the slit portion 16cb includes a small slit 16cb1 and a large slit 16cb2. The small slit 16cb1 is provided on the boss body 16ca. For example, the small slit 16cb1 is provided on the tip end side of the boss body 16ca. A shaft portion of the bolt 50 is disposed in the small slit 16cb1.

The large slit 16cb2 is provided on the boss body 17ca so as to be adjacent to the small slit 16cb1. For example, the large slit 16cb2 is provided on the base end side of the boss body 17ca. A slit width of the large slit 16cb2 is larger than a slit width of the small slit 16cb1. The head of the bolt 50 is disposed in the large slit 16cb2 (see FIG. 5).

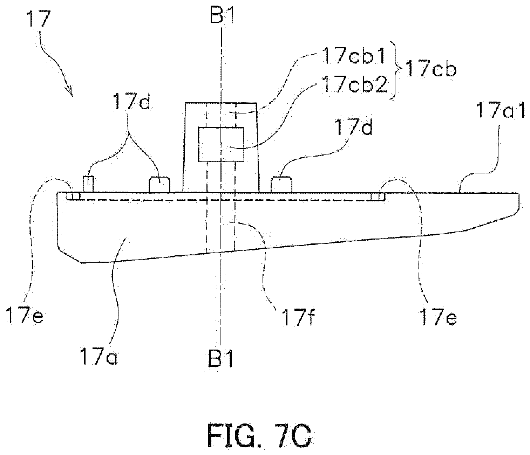

As shown in FIGS. 7B and 7C, the slit portion 17cb includes a bolt hole 17cb1 and a slit 17cb2. The bolt hole 17cb1 is provided on the boss body 17ca. For example, the bolt hole 17cb1 is provided on the tip end side of the boss body 17ca. The shaft portion of the bolt 50 is inserted into the bolt hole 17cb1 (see FIG. 5).

The slit 17cb2 is provided on the boss body 17ca so as to be adjacent to the bolt hole 17cb1. For example, the slit 17ccb2 is provided on the base end side of the boss body 17ca. A slit width of the slit 17cb2 is larger than a diameter of the bolt hole 17cb1. The nut 51 is disposed in the slit 17cb2. The slit width is defined in the direction perpendicular to a bolt axis center B1. For example, the slit width is defined in the front-rear direction along the facing surfaces 16a1, 17a1 of the cover bodies 16a, 17a.

As shown in FIGS. 6B, 6C, 7B, and 7C, at least one first positioning protruded portion 16d, 17d is used for positioning the cover members 16, 17 on the housing body 31. At least one first positioning protruded portion 16d, 17d respectively protrudes from the cover body 16a, 17a. At least one first positioning protruded portion 16d, 17d is disposed along an inner peripheral surface of the pair of discharge portions 34, 35 (see FIG. 3B).

In this embodiment, an example is described in which at least one first positioning protruded portion 16d, 17d is a plurality of first positioning protruded portions 16d, 17d, for example, the five first positioning protruded portions 16d, 17d.

As shown in FIGS. 6B, 6C, 7B, and 7C, the seal members 18a, 18b (see FIG. 5) are disposed in the seal grooves 16e, 17e. The seal grooves 16e, 17e are formed in a groove shape on the cover bodies 16a, 17a. The seal grooves 16e, 17e are formed in the groove shape so as to surround the boss portions 16c, 17c. The seal grooves 16e, 17e are formed in the groove shape on the facing surfaces 16a1, 17a1 of the cover bodies 16a, 17a, which faces the bottom portions 38a, 39a of the cover arrangement portions 38, 39, so as to surround the boss portions 16c, 17c.

As shown in FIGS. 6A, 6B, 6C, 7A, 7B, and 7C, the holes 16f, 17f for the tool are used when the bolt 50 is screwed into the nut 51. The holes 16f, 17f for the tool are provided on the cover bodies 16a, 17a and the boss portions 16c, 17c. The holes 16f, 17f for the tool are connected to the slit portions 16cb, 17cb of the boss portions 16c, 17c. For example, the holes 16f, 17f for the tool are respectively connected to the large slit 16cb2 and the slit 17cb2 of the boss portions 16c, 17c.

One of the cover members 16, 17 further includes a second positioning protruded portion 16h (an example of a second protruded portion). In this embodiment, an example in which the cover member 16 further includes the second positioning protruded portion 16h is described. The second positioning protruded portion 16h projects from the cover body 16a. The second positioning protruded portion 16h is disposed in the positioning recess 38b (see FIG. 3B) of the cover arrangement portion 38 of the housing 14.

The second positioning protruded portion 16h is provided on the cover body 16a in order to distinguish the cover member 16 from the cover member 17. The positioning recess 38b is provided only on the cover arrangement portions 38. In other words, the positioning recess 38b is not provided on the cover arrangement portion 39.

It is possible to prevent erroneous assembly of the cover member 16 with respect to the cover arrangement portion 39 and erroneous assembly of the cover member 17 with respect to the cover arrangement portion 38, by disposing the second positioning protruded portion 16h of the cover member 16 in the positioning recess 38b of the cover arrangement portion 38.

The second positioning protruded portion 16h may be provided on the cover member 17. In this case, the positioning recess 38b is provided on the cover arrangement portion 39.

The pair of cover members 16, 17 including the above configuration are attached to the housing 14 as follows. First, the seal members 18a, 18b are respectively disposed in the seal grooves 16e, 17e of the cover members 16, 17. Next, the bolt 50 is disposed in the boss portion 16c of the cover member 16 and the nut 51 is disposed on the boss portion 17c of the cover member 17.

For example, the bolt 50 is disposed in the slit portion 16cb (the large slit 16cb2 and the small slit 16cb1) of the boss portion 16c, and the nut 51 is disposed in the slit portion 17cb (the slit 17cb2) of the boss portion 17c.

Subsequently, the boss portions 16c, 17c of the cover members 16, 17 are respectively disposed inside the discharge portions 34, 35 of the cover arrangement portions 38, 39. Thereby, the shaft portion of the bolt 50 is disposed as to be adjacent to the nut 51 in a state where the shaft portion of the bolt 50 is disposed in the slit portions 16cb, 17cb (the small slit 16cb1, the bolt hole 17cb1) of the boss portions 16c, 17c. In this state, the plurality of first positioning protruded portions 16d, 17d are disposed so as to respectively face the discharge portions 34, 35.

Subsequently, the tool is inserted into the hole 16f for the tool. The tool includes a hexagon wrench, a Phillips screwdriver, a flat head screwdriver, and the like. In this state, the bolt 50 is screwed into the nut 51 by rotating the tool.

The plurality of first positioning protruded portions 16d, 17d of the cover members 16, 17 are respectively disposed inside the discharge portions 34, 35 along the inner peripheral surfaces of the discharge portions 34, 35 of the cover arrangement portions 38, 39. Further, the cover members 16, 17 and the seal members 18a, 18b contact with the bottom portions 38a, 39a of the cover arrangement portions 38, 39. Thereby, the cover members 16, 17 are respectively disposed on the cover arrangement portions 38, 39 via the seal members 18a, 18b.

In a state where the cover members 16, 17 and the seal member 18 are disposed on the cover arrangement portions 38, 39, a gap is provided between the tips of the pair of boss portions 16c, 17c. Thereby, the cover members 16, 17 are connected to each other in a state where the cover members 16, 17 and the seal members 18a, 18b press the bottom portions 38a, 39a of the cover arrangement portions 38, 39.

### (Variations of the embodiment)

The configuration of the above embodiment may be configured as follows.

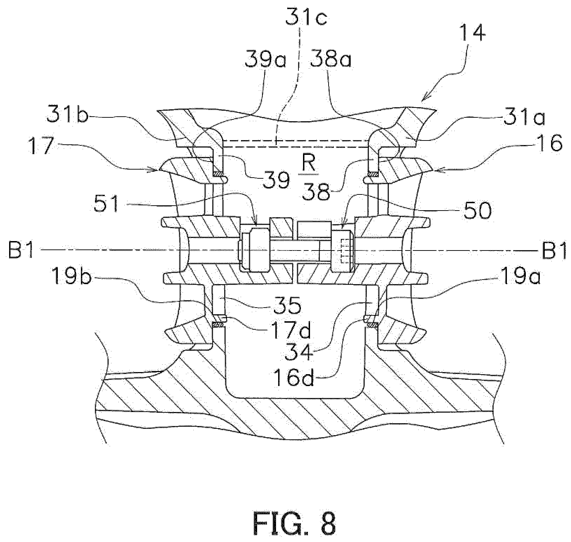

(A1) In the above embodiment, an example is described in which the seal members 18a, 18b are respectively disposed between the bottom portions 38a, 39a of the cover arrangement portions 38, 39 and the facing surfaces 16a1, 17a1 of the cover bodies 16a, 17a. Instead of this, as shown in FIG. 8, seal members 19a, 19b may be respectively disposed between an inner peripheral surfaces of the discharge portions 34, 35 and the first positioning protruded portions 16d, 17d. Both of the seal members 18a, 18b of the above embodiment and the seal members 19a, 19b of this variation may be used.

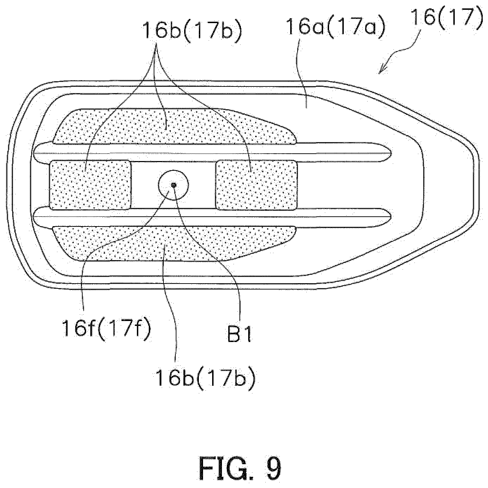

(A2) In the above embodiment, as shown in FIGS. 6A and 7A, an example is described in which the three exhaust hollow 16b, 17b are formed on the portions indicated by hatching. Instead of this, as shown in FIG. 9, four exhaust hollow 16b, 17b may be formed on the cover members 16, 17.

(A3) In the above embodiment, an example is described in which the seal grooves 16e, 17e are provided on the cover members 16, 17. The seal grooves 16e, 17e may be provided on the housing 14, for example, the bottom portions 38a, 39a of the cover arrangement portions 38, 39.

### (Summary)

With the outboard motor 5 including the above-described configuration, the non-metal cover members 16, 17 are attached to the housing 14 so as to cover the discharge portions 34, 35. In this state, the exhaust gas, which is discharged from the engine 9, is discharged to the outside of the housing 14 through the exhaust hollow 16b, 17b of the non-metal cover members 16, 17.

In this configuration, the exhaust gas, which is discharged from the exhaust hollow 16b, 17b of the cover members 16, 17, adheres to the outer surface around the exhaust hollow 16b, 17b. In this case, discoloration around the exhaust hollow 16b, 17b of the cover members 16, 17 can be suppressed, because the cover members 16, 17 are made of non-metal.

With the outboard motor 5, the discoloration around the exhaust hollow 16b, 17b of the cover members 16, 17 can be suppressed, because the cover members 16, 17 are made of resin.

With the outboard motor 5, the discoloration around the exhaust hollow 16b, 17b of the cover members 16, 17 can be suppressed in a state where the discharge portions 34, 35 are provided between the engine 9 and the cavitation plate 32.

With the outboard motor 5, the discoloration around the exhaust hollow 16b, 17b of the cover members 16, 17 can be suppressed in a state where the discharge portions 34, 35 are disposed on the cover arrangement portions 38, 39 of the housing 14.

With the outboard motor 5, the cover members 16, 17 are suitably positioned on the housing 14 by disposing the first positioning protruded portions 16d, 17d of the cover members 16, 17 on the discharge portions 34, 35 of the cover arrangement portions 38, 39.

With the outboard motor 5, the exhaust gas can be suitably discharged from the exhaust hollow 16b, 17b of the cover members 16, 17, because the seal members 18a, 18b, 19a, 19b are disposed between the housing 14 and the cover members 16, 17.

With the outboard motor 5, the seal member 18 can be suitably abut on the housing 14 and the cover members 16, 17, because the seal members 18a, 18b are disposed in the seal grooves 16e, 17e.

With the outboard motor 5, the cover members 16, 17 can be easily and surely attached to the housing 14, because the pair of cover members 16, 17 are connected to each other by the bolt 50 and the nut 51.

With the outboard motor 5, the second positioning protruded portion 16h is formed only on the cover member 16 and is disposed in the positioning recess 38b provided on one side surface of the housing 14. Thereby, it is possible to prevent erroneous assembly of the pair of cover members 16, 17.

With the outboard motor 5, the cooling water and the exhaust gas can be suitably discharged from the discharge chamber R to the outside of the housing 14 through the exhaust hollow 16b, 17b of the cover members 16, 17 and the discharge portions 34, 35, because the exhaust passage P1 and the cooling water passage P2 are connected to the discharge chamber R.

### (Other embodiments)

The configuration of the above embodiment may be configured as follows.

(B1) In the above embodiment, an example is described in which the exhaust passage P1 and the cooling water passage P2 are connected to the discharge chamber R. Instead of this, one of the exhaust passage P1 and the cooling water passage P2 may be connected to the other of the exhaust passage P1 and the cooling water passage P2, and the other of the exhaust passage P1 and the cooling water passage P2 may be connected to the discharge chamber R.

In this case, the wall portions 37a for the exhaust gas of FIG. 4 is connected to the wall portions 37b for the cooling water passage P2 which is provided between the engine 9 and the discharge chamber R. The same effect as the above effect can be obtained with this configuration.

(B2) In the above embodiment, an example is described in which the cover members 16, 17 include three or four exhaust hollow 16b, 17b. The number of the exhaust hollow 16b, 17b of the cover members 16, 17 may be set to any number, as long as the number of the exhaust hollow 16b, 17b is more than one.

### INDUSTRIAL APPLICABILITY

According to the present teaching, an outboard motor 5 is capable of suppressing discoloration around an exhaust hollow.

### REFERENCE SIGNS LIST

1 a watercraft
3 a hull
5 an outboard motor
9 an engine
14 a housing
16, 17 a cover member
16b, 17b an exhaust hollow
16d, 17d a first positioning protruded portion
16h a second positioning protruded portion
16e, 17e a seal groove
18a, 18b, 19a, 19b a seal member
32 a cavitation plate
33, 34, 35 a discharge portion
38, 39 a cover arrangement portion
38a a bottom portion
38b a positioning recess
50 a volt
51 a nut
P a discharge passage
P1 an exhaust passage
P2 a cooling water passage
R a discharge chamber

## Claims

1. An outboard motor (5) comprising:
an engine (9);
a drive shaft (10) extending in a first direction from the engine (9);
a propeller shaft (11) extending in a direction intersecting with the drive shaft (10);
a housing (14) configured to accommodate the engine (9), the drive shaft (10), and the propeller shaft (11) and includes a pair of discharge portions (33, 35), the discharge portions (33, 35) discharging exhaust gas and cooling water of the engine (9);
a discharge passage (P) configured to guide the exhaust gas and the cooling water from the engine (9) to the discharge portion (33, 35) inside the housing (14); and
a pair of non-metal cover members (16, 17) detachably attached to the housing (14) so as to cover the pair of discharge portions (33, 35) respectively and are connected to each other by a connecting member (50, 51), the cover members (16, 17) include an exhaust hollow (16b, 17b) respectively.

2. The outboard motor (5) according to claim 1; wherein the housing (14) is a metal member; and
the cover members (16, 17) are resin members.

3. The outboard motor (5) according to claim 1 further comprising:
a cavitation plate (32) provided on the housing (14); wherein
the discharge portions (33, 35) are provided on the housing (14) between the engine (9) and the cavitation plate (32).

4. The outboard motor (5) according to any one of claims 1 to 3; wherein the housing (14) includes cover arrangement portions (38, 39) which is formed in a concave shape for arranging the cover members (16, 17); and
the discharge portions (33, 35) are disposed in the cover arrangement portions (38, 39).

5. The outboard motor (5) according to any one of claims 1 to 4; wherein the cover members (16, 17) includes a first protruded portion (16d, 17d) which is disposed on the discharge portion (33, 35) respectively.

6. The outboard motor (5) according to any one of claims 1 to 5, further comprising:
seal members (18a, 18b) disposed between the housing (14) and the cover members (16, 17) respectively.

7. The outboard motor (5) according to claim 6; wherein one of the housing (14) and the cover member (16, 17) includes a first recess portion (16e, 17e) in which the seal member (18a, 18b) is disposed, respectively.

8. The outboard motor (5) according to any one of claims 1 to 7; wherein one of the pair of cover members (16) includes a second protruded portion (16h); and
the housing (14) includes a second recess portion (38b) in which the second protruded portion (16h) is disposed.

9. The outboard motor (5) according to any one of claims 1 to 8; wherein the discharge passage (P) includes a discharge chamber (R), a first passage (P1), and a second passage (P2);
the discharge chamber (R) is configured to guide the exhaust gas and the cooling water toward the discharge portions (33, 35);
the first passage (P1) is configured to guide the exhaust gas toward the discharge chamber (R); and
the second passage (P2) is configured to guide the cooling water toward the discharge chamber (R).

10. The outboard motor (5) according to any one of claims 1 to 8; wherein the discharge passage (P) includes a first passage (P1) and a second passage (P2);
the first passage (P1) is configured to guide the exhaust gas;
the second passage (P2) is configured to guide the cooling water; and
one of the first passage (P1) and the second passage (P2) is connected to the other of the first passage (P1) and the second passage (P2).

## Patentansprüche

1. Ein Außenbordmotor (5), der umfasst:
einen Motor (9);
eine Antriebswelle (10), die sich in einer ersten Richtung vom Motor (9) aus erstreckt; eine Propellerwelle (11), die sich in einer Richtung erstreckt, die sich mit der Antriebswelle (10) schneidet;
ein Gehäuse (14), das konfiguriert ist, um den Motor (9), die Antriebswelle (10) und die Propellerwelle (11) aufzunehmen, und ein Paar von Auslassabschnitten (33, 35) enthält, die Auslassabschnitte (33, 35) lassen Abgas und Kühlwasser des Motors (9) aus;
einen Auslassdurchgang (P), der konfiguriert ist, um das Abgas und das Kühlwasser vom Motor (9) zu dem Auslassabschnitt (33, 35) im Inneren des Gehäuses (14) zu leiten; und
ein Paar nicht-metallischer Abdeckelemente (16, 17), die abnehmbar am Gehäuse (14) angebracht sind, um so das Paar von Auslassabschnitten (33, 35) jeweils abzudecken, und die durch ein Verbindungselement (50, 51) miteinander verbunden sind, die Abdeckelemente (16, 17) enthalten jeweils einen Auslasshohlraum (16b, 17b).

2. Der Außenbordmotor (5) gemäß Anspruch 1, wobei das Gehäuse (14) ein Metallelement ist; und
die Abdeckelemente (16, 17) Kunststoffelemente sind.

3. Der Außenbordmotor (5) gemäß Anspruch 1, der weiterhin umfasst:
eine Kavitationsplatte (32), die auf dem Gehäuse (14) vorgesehen ist, wobei die Auslassabschnitte (33, 35) an dem Gehäuse (14) zwischen dem Motor (9) und der Kavitationsplatte (32) vorgesehen sind.

4. Der Außenbordmotor (5) gemäß irgendeinem der Ansprüche 1 bis 3, wobei das Gehäuse (14) Abdeckungsanordnungsabschnitte (38, 39) enthält, die in einer konkaven Form zum Anordnen der Abdeckelemente (16, 17) ausgebildet sind; und die Auslassabschnitte (33, 35) sind in den Abdeckungsanordnungsabschnitten (38, 39) angeordnet.

5. Der Außenbordmotor (5) gemäß irgendeinem der Ansprüche 1 bis 4, wobei die Abdeckelemente (16, 17) einen ersten vorspringenden Abschnitt (16d, 17d) enthalten, der jeweils am Auslassabschnitt (33, 35) angeordnet ist.

6. Der Außenbordmotor (5) gemäß irgendeinem der Ansprüche 1 bis 5, der weiterhin umfasst:
Dichtungselemente (18a, 18b), die jeweils zwischen dem Gehäuse (14) und den Abdeckelementen (16, 17) angeordnet sind.

7. Der Außenbordmotor (5) gemäß Anspruch 6, wobei eines von dem Gehäuse (14) und dem Abdeckelement (16, 17) einen ersten Aussparungsabschnitt (16e, 17e) enthält, in dem das Dichtungselement (18a, 18b) angeordnet ist.

8. Der Außenbordmotor (5) gemäß irgendeinem der Ansprüche 1 bis 7, wobei eines von dem Paar Abdeckelemente (16) einen zweiten vorstehenden Abschnitt (16h) enthält; und
das Gehäuse (14) einen zweiten Aussparungsabschnitt (38b) enthält, in dem der zweite vorspringende Abschnitt (16h) angeordnet ist.

9. Der Außenbordmotor (5) gemäß irgendeinem der Ansprüche 1 bis 8, wobei der Auslassdurchgang (P) eine Auslasskammer (R), einen ersten Durchgang (P1) und einen zweiten Durchgang (P2) enthält;
die Auslasskammer (R) konfiguriert ist, um das Abgas und das Kühlwasser zu den Auslassabschnitten (33, 35) zu leiten;
der erste Durchgang (P1) konfiguriert ist, um das Abgas zu der Auslasskammer (R) zu leiten; und
der zweite Durchgang (P2) konfiguriert ist, um das Kühlwasser zu der Auslasskammer (R) zu leiten.

10. Der Außenbordmotor (5) gemäß irgendeinem der Ansprüche 1 bis 8, wobei der Auslassdurchgang (P) einen ersten Durchgang (P1) und einen zweiten Durchgang (P2) enthält;
der erste Durchgang (P1) konfiguriert ist, um das Abgas zu leiten;
der zweite Durchgang (P2) konfiguriert ist, um das Kühlwasser zu leiten; und
einer von dem ersten Durchgang (P1) und dem zweiten Durchgang (P2) mit dem anderen von dem ersten Durchgang (P1) und dem zweiten Durchgang (P2) verbunden ist.

## Revendications

1. Moteur hors-bord (5) comprenant :
un moteur thermique (9) ;
un arbre d'entraînement (10) qui s'étend dans une première direction depuis le moteur thermique (9) ;
un arbre d'hélice (11) qui s'étend dans une direction intersectant l'arbre d'entraînement (10) ;
un boîtier (14) configuré pour recevoir le moteur thermique (9), l'arbre d'entraînement (10) et l'arbre d'hélice (11), et qui comprend une paire de portions d'évacuation (33, 35), les portions d'évacuation (33, 35) évacuant les gaz d'échappement et l'eau de refroidissement du moteur thermique (9) ;
un passage d'évacuation (P) configuré pour guider les gaz d'échappement et l'eau de refroidissement depuis le moteur thermique (9) vers la portion d'évacuation (33, 35) à l'intérieur du boîtier (14) ; et
une paire d'éléments de carénage non métalliques (16, 17) attachés de manière détachable au boîtier (14) de manière à recouvrir respectivement la paire de portions d'évacuation (33, 35) et connectés entre eux par un élément de connexion (50, 51), les éléments de carénage (16, 17) comprenant respectivement une cavité d'échappement (16b, 17b).

2. Moteur hors-bord (5) selon la revendication 1 ; dans lequel
le boîtier (14) est un élément métallique ; et
les éléments de carénage (16, 17) sont des éléments en résine.

3. Moteur hors-bord (5) selon la revendication 1, comprenant en outre :
une plaque de cavitation (32) pourvue sur le boîtier (14) ; dans lequel
les portions d'évacuation (33, 35) sont pourvues sur le boîtier (14) entre le moteur thermique (9) et la plaque de cavitation (32).

4. Moteur hors-bord (5) selon l'une quelconque des revendications 1 à 3 ; dans lequel
le boîtier (14) comprend des portions d'agencement de carénage (38, 39) qui sont conformées selon une forme concave pour agencer les éléments de carénage (16, 17) ; et
les portions d'évacuation (33, 35) sont disposées dans les portions d'agencement de carénage (38, 39).

5. Moteur hors-bord (5) selon l'une quelconque des revendications 1 à 4 ; dans lequel les éléments de carénage (16, 17) comprennent une première portion protubérante (16d, 17d) qui est respectivement disposée sur la portion d'évacuation (33, 35).

6. Moteur hors-bord (5) selon l'une quelconque des revendications 1 à 5, comprenant en outre :
des éléments d'étanchéité (18a, 18b) disposés respectivement entre le boîtier (14) et les éléments de carénage (16, 17).

7. Moteur hors-bord (5) selon la revendication 6 ; dans lequel un élément parmi le boîtier (14) et l'élément de carénage (16, 17) comprend une première portion de renfoncement (16e, 17e) dans laquelle l'élément d'étanchéité (18a, 18b) est respectivement disposé.

8. Moteur hors-bord (5) selon l'une quelconque des revendications 1 à 7 ; dans lequel
un élément de la paire d'éléments de carénage (16) comprend une deuxième portion protubérante (16h) ; et
le boîtier (14) comprend une deuxième portion de renfoncement (38b) dans laquelle est disposée la deuxième portion protubérante (16h).

9. Moteur hors-bord (5) selon l'une quelconque des revendications 1 à 8 ; dans lequel
le passage d'évacuation (P) comprend une chambre d'évacuation (R), un premier passage (P1) et un deuxième passage (P2) ;
la chambre d'évacuation (R) est configurée pour guider les gaz d'échappement et l'eau de refroidissement vers les portions d'évacuation (33, 35) ;
le premier passage (P1) est configuré pour guider les gaz d'échappement vers la chambre d'évacuation (R) ; et
le deuxième passage (P2) est configuré pour guider l'eau de refroidissement vers la chambre d'évacuation (R).

10. Moteur hors-bord (5) selon l'une quelconque des revendications 1 à 8 ; dans lequel
le passage d'évacuation (P) comprend un premier passage (P1) et un deuxième passage (P2) ;
le premier passage (P1) est configuré pour guider les gaz d'échappement ;
le deuxième passage (P2) est configuré pour guider l'eau de refroidissement ; et
un passage parmi le premier passage (P1) et le deuxième passage (P2) est connecté à l'autre passage parmi le premier passage (P1) et le deuxième passage (P2).
